# DEMANDE DE BREVET EUROPEEN

(11) **EP 1 143 403 A1**
(43) Date de publication de la demande: **10.10.2001**
(21) Numéro de dépôt: 01400759.5
(22) Date de dépôt: 23.03.2001
(51) Int. Cl.: G08G 1/16

(54) **Dispositif d'aide à la conduite du véhicule automobile**

(30) Priorité: 28.03.2000 FR 0003891
(71) Demandeur: Renault, 92100 Boulogne Billancourt (FR)
(72) Inventeur: Perrin, Bertrand, 92500 Rueil Malmaison (FR)

(57) **Abrégé**

Le dispositif comprend des moyens de détection (1) de la présence d'au moins un autre véhicule à l'arrière du véhicule équipé dudit dispositif, dans une voie de circulation adjacente à celle suivie par ce dernier, et des moyens d'alerte (8) du conducteur du véhicule équipé, activés en réponse à une telle détection. Suivant l'invention, le dispositif comprend en outre a) des moyens (7, 9, 10) pour mémoriser le passage dudit véhicule équipé (A) dans un virage (V), et b) des moyens (11, 12, 13) coopérant avec lesdits moyens (7, 9, 10) de mémorisation dudit passage, pour établir la présence ultérieure éventuelle dudit autre véhicule (B) dans la voie de circulation du véhicule équipé (A) et dans ledit virage (V), et pour empêcher alors l'activation des moyens d'alerte (8) du conducteur.

## Description

La présente invention est relative à un dispositif d'aide à la conduite d'un véhicule automobile lors d'un changement de voie de circulation de ce véhicule, et, plus particulièrement, à un tel dispositif comprenant des moyens de détection de la présence d'un autre véhicule à l'arrière du véhicule équipé dudit dispositif, dans une voie de circulation adjacente à celle suivie par ce dernier, et des moyens d'alerte du conducteur dudit véhicule équipé, activés en réponse à une telle détection.

On connaît de tels dispositifs, notamment de la demande de brevet anglais 2 265 744 et du brevet canadien 2 120 638, conçus essentiellement pour éviter une collision d'un véhicule qui change de voie de circulation avec un véhicule circulant dans une voie adjacente. Il s'agit de sécuriser de tels changements de voie en cas de défaut d'attention du conducteur du véhicule en manoeuvre ou, plus particulièrement, en cas de non perception par ce conducteur d'un véhicule adjacent dans le rétroviseur de ce véhicule, du fait que ce véhicule se trouve dans "l'angle mort".

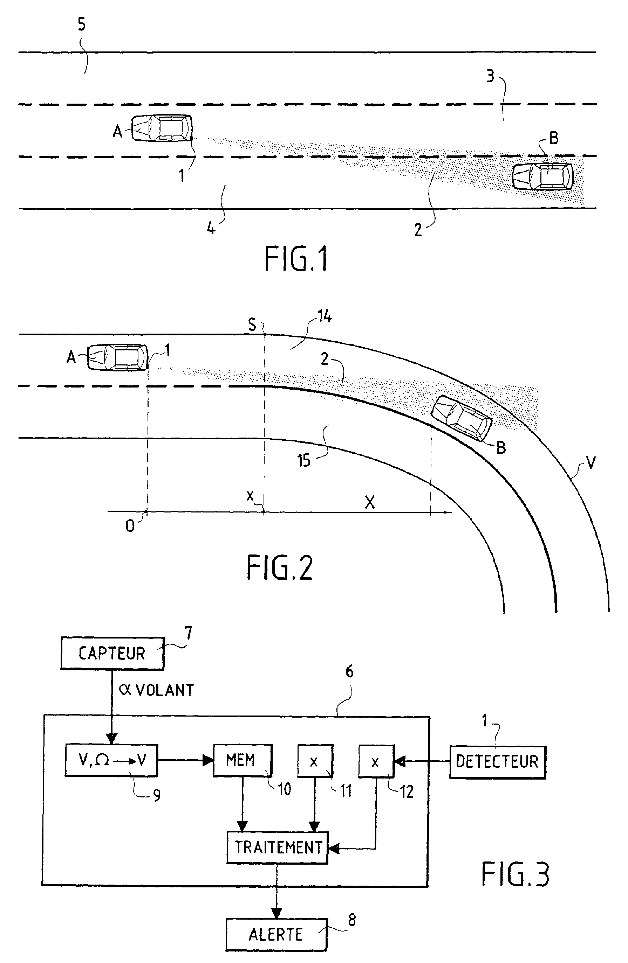

Comme schématisé à la figure 1 du dessin annexé, les dispositifs évoqués ci-dessus sont basés sur l'utilisation d'un détecteur 1, à faisceau 2 de rayonnement radar, infrarouge ou ultra-sonore par exemple, "éclairant" le voisinage arrière du véhicule A selon un axe légèrement oblique par rapport à celui de la voie de circulation 3 du véhicule A, de manière qu'un véhicule B roulant plus vite que le véhicule A, dans une voie 4 adjacente, entre dans ce faisceau à une certaine distance du véhicule A et soit alors signalé à l'attention du conducteur du véhicule A, en particulier quand ce conducteur manifeste, en actionnant un clignotant par exemple, son intention de pénétrer dans la voie 4. Une collision éventuelle des véhicules est ainsi prévenue. Bien entendu le véhicule A peut être équipé à l'arrière de deux détecteurs symétriques, de manière à prévenir des collisions aussi bien dans la voie 4 située à sa gauche que dans la voie 5 située à sa droite.

Si un tel dispositif est efficace quand le véhicule A circule en ligne droite, il n'en est pas de même en virage, comme illustré à la figure 2 du dessin annexé. Sur cette figure il apparaît que, du fait de la "rigidité" de l'ensemble véhicule A-faisceau 2, un véhicule B se situant dans la même voie de circulation que le véhicule A peut cependant pénétrer dans le faisceau 2 du détecteur 1 et être alors signalé au conducteur, alors même qu'il ne crée aucun risque de collision en cas de changement de voie du véhicule A.

La présente invention a précisément pour but de réaliser un dispositif d'aide au changement de voie de circulation d'un véhicule automobile, qui ne souffre pas de cet inconvénient.

On atteint ce but de l'invention avec un dispositif du type décrit en préambule de la présente description, remarquable en ce qu'il comprend a) des moyens pour mémoriser le passage du véhicule équipé de ce dispositif dans un virage et b) des moyens coopérant avec lesdits moyens de mémorisation dudit passage, pour établir la présence ultérieure éventuelle d'un autre véhicule dans la voie de circulation du véhicule équipé et dans ledit virage, et pour empêcher alors l'activation des moyens d'alerte du conducteur.

Comme on le verra plus loin en détail, l'invention permet ainsi avantageusement de supprimer une fausse alerte, au bénéfice du confort de conduite du véhicule.

Selon d'autres caractéristiques de la présente invention, les moyens de mémorisation comprennent des moyens d'évaluation de la courbure de la voie de circulation choisis dans le groupe formé par : un capteur d'angle de rotation du volant de direction du véhicule équipé, un gyromètre, des capteurs de vitesse de roues du véhicule. Les moyens de mémorisation comprennent aussi des moyens pour calculer des valeurs de rayon de courbure d'une portion de voie de circulation parcourue par le véhicule équipé, à partir des signaux délivrés par un ou plusieurs de ces capteurs et, éventuellement de la vitesse linéaire du véhicule dans ce virage. Les moyens de mémorisation comprennent encore une mémoire pour stocker temporairement les valeurs de rayon de courbure calculées par les moyens de calcul.

Suivant l'invention encore, les moyens pour établir la présence éventuelle des deux véhicules dans la même voie de circulation comprennent des moyens de traitement d'informations alimentés par les valeurs de rayon de courbure en mémoire, par une mesure de la vitesse du véhicule permettant de mesurer la distance séparant le véhicule équipé de la sortie d'un virage et par une mesure de la distance séparant les deux véhicules délivrée par le détecteur, pour commander sélectivement l'activation des moyens d'alerte.

D'autres caractéristiques et avantages de la présente invention apparaîtront à la lecture de la description qui va suivre et à l'examen du dessin annexé dans lequel :
- les figures 1 et 2 sont des schémas de circulation de véhicules déjà décrits en préambule de la présente description,
- la figure 3 est une représentation schématique du dispositif suivant la présente invention,
- la figure 4 représente l'organigramme d'un programme exécuté par le dispositif de la figure 3.

On se réfère à la figure 3 du dessin annexé où il apparaît que le dispositif suivant l'invention comprend essentiellement un calculateur numérique 6 alimenté par le signal délivré par le détecteur 1 mentionné en liaison avec les figures 1 et 2, par un signal délivré par un ou plusieurs capteurs tels que 7 et permettant de mesurer la vitesse angulaire du véhicule A équipé de ce dispositif, dans le plan de roulement de ce véhicule, le calculateur numérique fournissant à son tour, à des moyens d'alerte 8, un signal d'activation commandant l'émission par ces derniers d'un signal d'alarme sonore et/ou visuelle perceptible par le conducteur du véhicule, dans des conditions qui seront décrites dans la suite de la présente description.

A titre d'exemple illustratif et non limitatif seulement, le capteur peut être constitué par un capteur de l'angle de rotation αᵥₒₗₐₙₜ du volant de direction du véhicule ou encore par un gyromètre sensible aux mouvements de lacet du véhicule A.

Le calculateur 8 comprend des moyens 9 de mesure et de calcul propres à mesurer des valeurs de rayon de courbure R d'une portion de voie de circulation sur laquelle roule le véhicule A, et une mémoire 10 pour stocker temporairement les valeurs de ce rayon de courbure pendant un intervalle de temps prédéterminé. Les valeurs stockées sont régulièrement "écrasées" et mises à jour par les valeurs de rayon de courbure de la portion suivante sur laquelle passe le véhicule A. Le calculateur 6 comprend encore un moyen 11 pour établir et stocker la valeur courante x de la distance qui sépare le véhicule A de la sortie S d'un virage V (voir figure 2) et un moyen 12 pour stocker la valeur courante X de la distance qui sépare le véhicule A d'un véhicule B qui le suit, cette valeur X étant fournie classiquement par le détecteur 1, à rayonnement radar, infrarouge ou ultra-sonore par exemple. Le calculateur 6 comprend enfin des moyens de traitement d'informations 13 commandant sélectivement l'activation des moyens d'alerte 8 du conducteur du véhicule A.

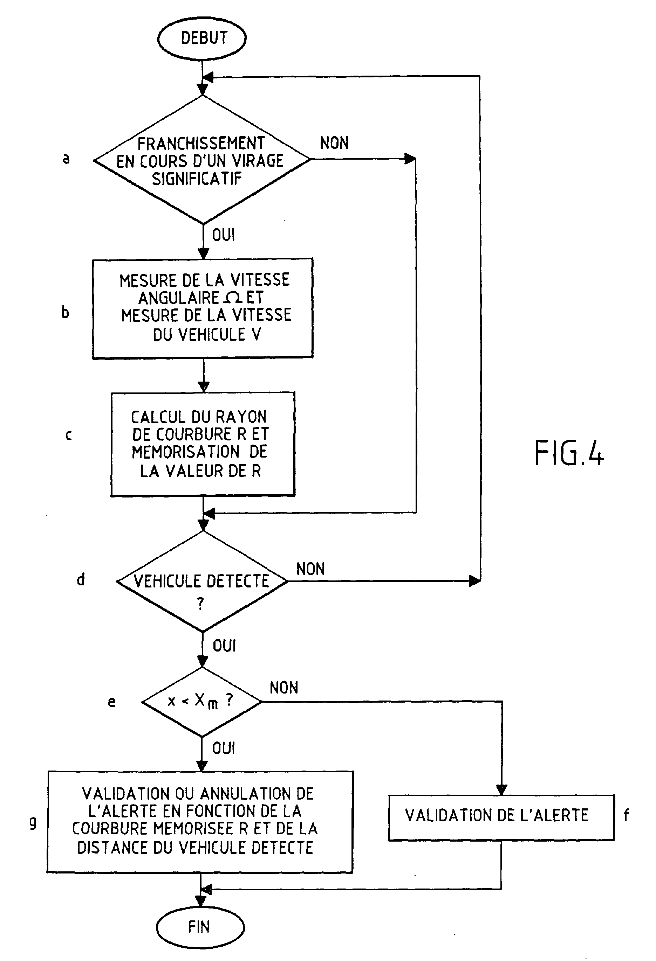

Le calculateur 6 est bien entendu équipé des moyens matériels et logiciels nécessaires à l'exécution des calculs et du traitement évoqué ci-dessus, qui seront décrits dans la suite en liaison avec l'organigramme de la figure 4.

De ce qui précède on retiendra notamment que les moyens 7, 9, 10 constituent des moyens de mémorisation du passage du véhicule équipé dans un virage alors que les moyens (1, 11, 12, 13) constituent des moyens permettant d'établir la présence d'un véhicule tel que B derrière le véhicule A et pour décider de l'activation des moyens d'alerte 8, notamment, suivant la présente invention, pour empêcher cette activation quand la position du véhicule B est telle que celui-ci est sans danger pour le véhicule A, comme on le verra plus loin.

On va maintenant décrire le fonctionnement du dispositif suivant l'invention en se référant à l'organigramme de la figure 4 qui explicite le processus décisionnel mis en oeuvre par le calculateur 6, dûment programmé à cet effet.

Le capteur 7 délivrant en permanence un signal représentatif d'une rotation de la direction suivie par le véhicule A dans son plan de roulement, la surveillance des évolutions de ce signal par le calculateur 6 permet à celui-ci de déterminer éventuellement (étape a) la présence actuelle du véhicule dans un virage de courbure significative. A l'étape b, les moyens 9 établissent alors la vitesse angulaire Ω du véhicule dans ledit virage grâce au signal fourni par le capteur 7. Par ailleurs ces moyens connaissent la vitesse linéaire V du véhicule, toujours disponible dans un véhicule automobile. A l'étape c, les moyens 9 calculent des valeurs de rayon de courbure R du virage à partir des valeurs connues de Ω, V et de la relation R = V/Ω. Les valeurs de R ainsi calculées sont mises en mémoire 10.

Si alors (étape d) le détecteur 1 ne perçoit aucun véhicule en arrière du véhicule A, le processus se boucle sur l'étape a.

Dans le cas contraire (détection de la présence du véhicule B), le calculateur 6 compare (étape e) la distance x à laquelle se trouve actuellement la sortie S du virage (voir figure 2) à la portée maximale Xₘ (connue) du détecteur 1. Cette distance x est facilement déterminée par le calculateur 6 qui connaît à la fois la vitesse du véhicule et le moment auquel le véhicule est sorti du virage, grâce au signal délivré par le capteur 7.

Si cette distance x est supérieure à la portée Xₘ du détecteur 1, on peut en déduire que les deux véhicules roulent dans une portion en ligne droite de la route, comme illustré à la figure 1, et que le véhicule B détecté se trouve alors dans la voie 4 adjacente à celle (3) suivie par le véhicule A. Il est important alors de signaler la proximité de ce véhicule B au conducteur, dans l'hypothèse où celui-ci aurait décidé peu avant de passer dans la voie occupée par le véhicule B, pour doubler un autre véhicule plus lent le précédant, par exemple. Les moyens 13 valident alors la détection opérée par le détecteur 1 (étape f) et commandant l'activation des moyens d'alerte 8 pour que le conducteur du véhicule A ainsi alerté renonce provisoirement à son intention de changement de voie, au moins jusqu'à ce que le véhicule B sorte du champ du détecteur 1.

Si, au contraire, le calculateur détermine que x < Xₘ, le véhicule B se trouve obligatoirement dans le virage V. Dans ce cas, il peut rouler soit dans la même voie 14 que le véhicule A (comme représenté à la figure 2), soit dans la voie de gauche 15. Dans ce dernier cas il convient que les moyens d'alerte 8 soient activés. Par contre si les deux véhicules se trouvent dans la même voie 14, il n'y a pas lieu d'activer ces moyens, le véhicule B ne créant aucun danger en cas de manoeuvre de changement de voie entreprise par le conducteur du véhicule A. La présente invention a précisément pour but d'empêcher l'activation des moyens d'alerte dans ce cas.

Pour ce faire les moyens de traitement d'information 13 sont dûment programmés pour assurer une discrimination des deux cas de figure décrits ci-dessus. Cette discrimination s'opère à l'étape g, à partir de plusieurs informations disponibles, notamment les rayons de courbure de la portion de voie considérée, stockés dans la mémoire 10, la distance x séparant le véhicule d'un virage franchi, calculée par la relation x = V.t où t est le temps écoulé depuis la sortie du virage, et la distance X qui sépare les deux véhicules.

D'autres informations peuvent être utilisées pour aider cette discrimination, telles que par exemple la position du véhicule B dans le faisceau 2, position qui est connue si le détecteur 1 est du type radar.

On comprend que la probabilité pour le véhicule B de se trouver alors dans la voie 15 est d'autant plus forte que le rayon de courbure R est grand. L'homme de métier formalisera sans difficultés les relations géométriques permettant d'assurer la discrimination recherchée, à partir de ses connaissances normales et des indications données ci-dessus. Cette discrimination permet de supprimer de fausses alertes du conducteur du véhicule A, conformément au but poursuivi par la présente invention.

Bien entendu l'invention n'est pas limitée au mode de réalisation décrit et représenté qui n'a été donné qu'à titre d'exemple. C'est ainsi que le dispositif suivant l'invention pourrait être dupliqué de manière à prévenir de fausses alertes en virage, que le conducteur du véhicule souhaite passer dans une voie se situant à gauche (pour un dépassement) ou à droite (pour un rabattement) de celle dans laquelle roule son véhicule.

## Revendications

1. Dispositif d'aide à la conduite d'un véhicule automobile lors d'un changement de voie de circulation de ce véhicule, comprenant des moyens de détection (1) de la présence d'un autre véhicule (B) à l'arrière du véhicule (A) équipé dudit dispositif, dans une voie de circulation adjacente à celle suivie par ce dernier, et des moyens d'alerte (8) du conducteur dudit véhicule équipé, activés en réponse à une telle détection, **caractérisé en ce qu'**il comprend :
a) des moyens (7, 9, 10) pour mémoriser le passage dudit véhicule équipé (A) dans un virage (V), et
b) des moyens (11, 12, 13) coopérant avec lesdits moyens (7, 9, 10) de mémorisation dudit passage, pour établir la présence ultérieure éventuelle dudit autre véhicule (B) dans la voie de circulation du véhicule équipé (A) et dans ledit virage (V), et pour empêcher alors l'activation des moyens d'alerte (8) du conducteur.

2. Dispositif conforme à la revendication 1, **caractérisé en ce que** lesdits moyens (7, 9, 10) de mémorisation comprennent des moyens d'évaluation de la courbure de ladite voie de circulation choisis dans le groupe formé par : un capteur d'angle de rotation du volant de direction du véhicule équipé, un gyromètre, des capteurs de vitesse de roues du véhicule.

3. Dispositif conforme à la revendication 2, **caractérisé en ce que** lesdits moyens (7, 9, 10) de mémorisation comprennent des moyens (9) pour calculer des valeurs de rayons de courbure (R) d'une portion de voie de circulation parcourue par le véhicule équipé (A), à partir de signaux délivrés par un ou plusieurs desdits capteurs et, éventuellement, de la vitesse linéaire (V) du véhicule (A) dans ce virage.

4. Dispositif conforme à la revendication 3, **caractérisé en ce que** les moyens (7, 9, 10) de mémorisation comprennent encore une mémoire (10) pour stocker temporairement lesdites valeurs de rayon de courbure (R) calculées par lesdits moyens de calcul (9).

5. Dispositif conforme à la revendication 4, **caractérisé en ce que** lesdits moyens (11, 12, 13) pour établir la présence éventuelle des deux véhicules (A, B) dans la même voie (14) de circulation comprennent des moyens de traitement d'informations (13) alimentés par lesdites valeurs de rayon de courbure (R) d'une portion de voie de circulation en mémoire, par la valeur de la distance (x) séparant le véhicule équipé (A) de la sortie (S) d'un virage (V), tirée d'une mesure du temps et d'une mesure de la vitesse du véhicule et par une mesure (X) de la distance séparant les deux véhicules (A, B) délivrée par le détecteur (1), pour commander sélectivement l'activation desdits moyens d'alerte (8).

6. Dispositif conforme à la revendication 5, **caractérisé en ce que** lorsque le véhicule équipé (A) sort d'un virage et que le détecteur (1) signale la présence dudit autre véhicule (B) en arrière du véhicule équipé (A), lesdits moyens de traitement d'informations (13) commandent l'activation des moyens d'alerte (8) si la distance (x) séparant le véhicule équipé (A) de la sortie du virage est supérieure à la portée maximale (Xₘ) du détecteur (1).

7. Dispositif conforme à la revendication 6, **caractérisé en ce que** si x < Xₘ, les moyens de traitement d'informations (13) commandent ou non l'activation des moyens d'alerte, en fonction du rayon de courbure (R) du virage dans lequel est engagé ledit autre véhicule (B) et de la distance (X) séparant lesdits véhicules (A, B).
